(19) **Europäisches Patentamt / European Patent Office / Office européen des brevets**

(11) **EP 3 006 322 B1**

(12) **EUROPEAN PATENT SPECIFICATION**

(45) Date of publication and mention
of the grant of the patent:
**01.09.2021 Bulletin 2021/35**

(51) Int Cl.:
**B63B 49/00** (2006.01)  **B63H 25/04** (2006.01)
**G01C 21/00** (2006.01)  **G08G 3/00** (2006.01)
**G01C 21/20** (2006.01)

(21) Application number: **14804918.2**

(22) Date of filing: **13.05.2014**

(86) International application number:
**PCT/JP2014/062659**

(87) International publication number:
**WO 2014/192531 (04.12.2014 Gazette 2014/49)**

(54) **NAVIGATION ASSISTANCE DEVICE, NAVIGATION ASSISTANCE METHOD, AND PROGRAM**

NAVIGATIONSASSISTENZVORRICHTUNG, NAVIGATIONSASSISTENZVERFAHREN UND PROGRAMM

DISPOSITIF D'AIDE À LA NAVIGATION, PROCÉDÉ D'AIDE À LA NAVIGATION ET PROGRAMME

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.05.2013 JP 2013115901**

(43) Date of publication of application:
**13.04.2016 Bulletin 2016/15**

(73) Proprietor: **Furuno Electric Co., Ltd.**
**Nishinomiya-City, Hyogo 662-8580 (JP)**

(72) Inventors:
• **MAENO, Hitoshi**
**Nishinomiya-City, Hyogo 662-8580 (JP)**
• **NAKAGAWA, Kazuya**
**Nishinomiya-City, Hyogo 662-8580 (JP)**
• **KAWANAMI, Satoshi**
**Nishinomiya-City, Hyogo 662-8580 (JP)**

(74) Representative: **Müller Hoffmann & Partner Patentanwälte mbB**
**St.-Martin-Strasse 58**
**81541 München (DE)**

(56) References cited:
EP-A1- 2 498 056       WO-A1-2008/096376
WO-A1-2011/055512      JP-A- 2012 086 604
JP-A- 2013 104 690     JP-B1- 4 934 756
US-A1- 2008 255 757

**Description**

**TECHNICAL FIELD**

This disclosure relates to a method and a device for assisting navigation, and a program.

**BACKGROUND ART**

For example, ships travel on the sea. The ships acquire hydrographic information in the vicinity of a ship concerned, as information required for navigation (e.g., Patent Document 1).
WO 2008/096 376 A1 discloses a route selection method based on actual and forecast environmental parameters. A plurality of possibly routes for a ship are calculated and weighted by the environmental parameters and an energy usage model of the ship. Out of the calculated routes, the most energy efficient route is selected. The environmental parameters comprise wind speed, wave height and ocean current speed in the vicinity of the ship.
US 2008/255 757 A1 describes a method for generating a route for a vessel. The route generation takes into account data regarding tides, currents, winds and waves. A selection is made from calculated possible routes to minimize the probability of treacherous conditions, in particular wave encounters.
JP 4 934 756 B1 discloses an optimal route computing system for a marine vessel based on hydrographic data, weather data and a hull motion model of the vessel. The route is optimized for travel time and fuel usage.

**REFERENCE DOCUMENT(S) OF CONVENTIONAL ART**

Patent Document

Patent Document 1: JP2001-133548A

**DISCLOSURE OF THE INVENTION**

**[Problems to be Solved by the Invention]**

In some cases, ships are configured to be capable of receiving meteorological data distributed from a meteorological observatory, for example. In such cases, it can be considered that a computer, etc., provided to a ship concerned sets a target route to a destination based on the meteorological data. In such cases, for example, it can be considered that the computer sets such a route that the ship concerned rides a tide moving in a traveling direction of the ship concerned.
However, the meteorological data described above is meteorological data for a wide range on the sea. Therefore, the meteorological data is insufficient to suitably calculate influence of meteorological phenomena on the individual ship at a current position of the ship. More specifically, due to an error in the measurement of meteorological phenomena described above, a resolution, etc., there is a case where it is difficult for the computer to accurately grasp the influence of the meteorological phenomena on the ship even by using the meteorological data described above.
This disclosure is made in view of the above situations and aims to provide a method and device for assisting navigation, and a program, which are capable of detecting influence of hydrographic phenomena on a ship more accurately.

**[Summary of the Invention]**

The above-mentioned problem is solved by the subject-matter of the independent claims, defining the invention.
Further embodiments of the invention are set out in the dependent claims.

**Effect(s) of the Invention**

According to this disclosure, influence of the hydrographic phenomena on the predetermined ship can be detected more accurately.

**BRIEF DESCRIPTION OF DRAWING(S)**

Fig. 1 is a schematic view illustrating a state where a ship provided with a navigation assisting system according to one embodiment of this disclosure is traveling on the sea.

Fig. 2 is a schematic view illustrating velocity vectors, etc., of hydrographic phenomena at a single position in the vicinity of the ship, the schematic view illustrating one example of hydrographic phenomena in the vicinity of the ship.

Fig. 3 is a block diagram illustrating a schematic configuration of the navigation assisting system.

Fig. 4 is a schematic view illustrating processing at an efficiency calculating module.

Fig. 5 is a schematic view illustrating an efficiency chart stored in the efficiency calculating module.

Fig. 6 is a schematic view illustrating an influence level map.

Fig. 7 is a schematic view illustrating processing at an azimuth range setting submodule.

Fig. 8 is a flowchart illustrating one example of a flow of processing at a navigation assisting device.

Fig. 9 is a block diagram of a substantial part of a navigation assisting system according to a modification of this disclosure.

Fig. 10 is a schematic view illustrating processing at a map expanding submodule.

## MODE(S) FOR CARRYING OUT THE INVENTION

Hereinafter, a mode for carrying out this disclosure is described with reference to the drawings. This disclosure is broadly applicable as method and device for assisting navigation, and a program.

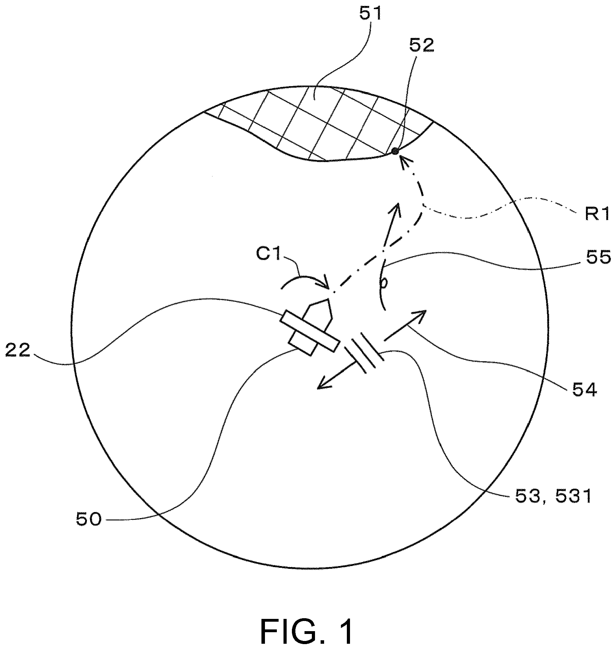

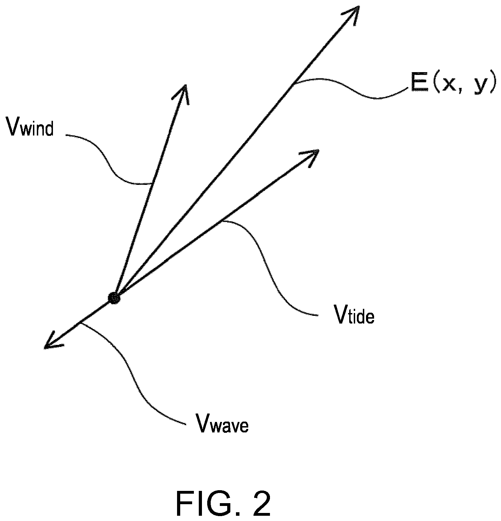

Fig. 1 is a schematic view illustrating a state where a ship (ship 50) provided with a navigation assisting system 1 according to one embodiment of this disclosure is traveling on the sea. In Fig. 1, a circular area indicates the ship 50 and the vicinity of the ship 50. Fig. 2 is a schematic view illustrating velocity vectors $V_{wave}$, $V_{tide}$ and $V_{wind}$ of respective hydrographic phenomena, etc., at a single position in the vicinity of the ship 50.

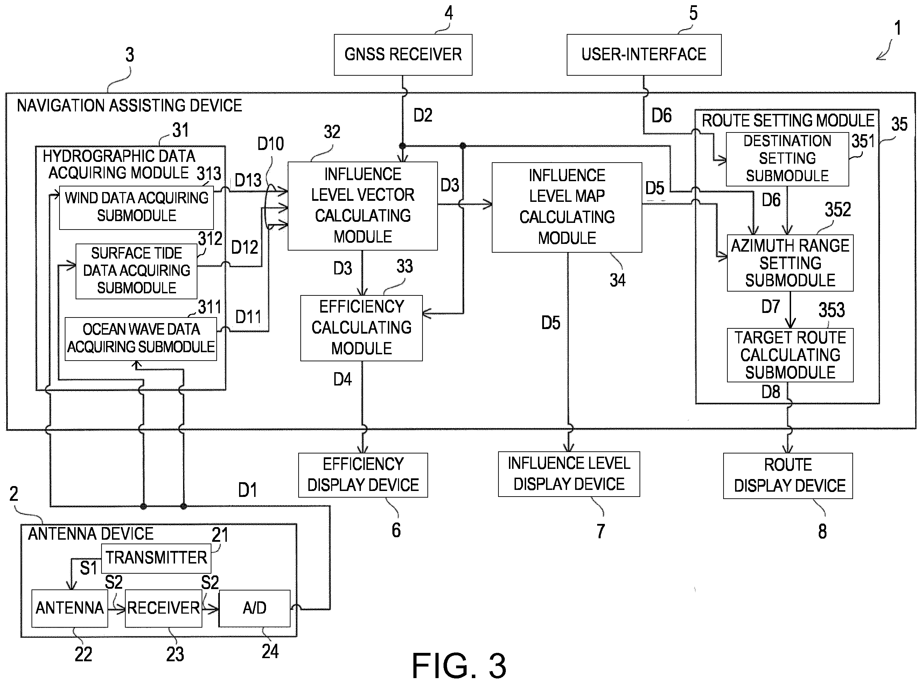

Note that, "the vicinity of the ship 50" means a marine area directly related to the navigation of the ship 50, and for example, it is an area from the ship 50 to about 8 nautical miles therefrom. Fig. 3 is a block diagram illustrating a schematic configuration of the navigation assisting system 1.

With reference to Figs. 1 to 3, in this embodiment, the ship provided with the navigation assisting system 1 is referred to as the ship 50. The ship 50 is one example of a "predetermined ship" of this disclosure. Fig. 1 illustrates the state where the ship 50 is traveling on the sea to a destination 52 of a land 51, and ocean waves 53, a surface tide 54, and wind 55 occur in the vicinity of the ship 50.

A direction of the ocean waves 53 is different in each marine area. In Fig. 1, the ocean waves 53 in the vicinity of the ship 50 are exemplary illustrated. Each ocean wave 53 has a crest line 531. The crest line 531 indicates a crest of a wave substantially continuously appearing in a long string shape and water bubbles caused thereby.

A direction of the surface tide 54 is different in each marine area. In Fig. 1, one example of the surface tide 54 in the vicinity of the ship 50 is illustrated. A direction of the wind 55 is different in each marine area. In Fig. 1, one example of the wind 55 in the vicinity of the ship 50 is illustrated.

The ship 50 is, for example, a large-size ship, such as a tanker, and travels to the destination 52 of the land 51 by following a predetermined target route R1.

The navigation assisting system 1 includes an antenna device 2, a navigation assisting device 3, a GNSS receiver 4, a user-interface 5, an efficiency display device 6, an influence level display device 7, and a route display device 8.

The antenna device 2 is, for example, a meteorological radar antenna, and includes a transmitter 21, an antenna 22, a receiver 23, and an A/D converter 24.

The transmitter 21 is configured to generate a transmission signal (detection signal) S1 by using one of a solid element (semiconductor element) and a magnetron, etc. The transmitter 21 outputs the transmission signal S1 to the antenna 22 at a predetermined cycle.

The antenna 22 is a radar antenna capable of transmitting the transmission signals S1 as pulse-shaped radio waves having a strong directivity. Further, the antenna 22 is configured to receive reception signal(s) S2 including an echo signal (reflection wave) caused by the transmission signals S1. The antenna 22 is, for example, a slot array antenna.

Note that, the navigation assisting system 1 measures a period of time from a transmission of the transmission signal S1 until a reception of the reception signal S2 caused by the transmission of the transmission signal S1. Thus, the navigation assisting system 1 can detect a distance r from the ship 50 to a detection target.

The antenna 22 is configured to be capable of rotating over 360° on a horizontal plane, and rotates (revolves) in an azimuth direction C1 about a vertical axis extending in up-and-down directions of the ship 50. The antenna 22 is configured to repeat the transmission and reception of the signals S1 and S2 while changing the transmitting direction of the transmission signal S1 (while changing a rotational angle of the antenna 22). With the above configuration, the radar apparatus 1 can detect over 360° within a range of a few nautical miles in the vicinity of the ship 50.

Note that, in this embodiment, operation performed from a transmission of the transmission signal S1 (pulse-shaped radio wave) until the next transmission of the transmission signal S1 is referred to as the "sweep." Further, the operation of rotating 360° the antenna 22 while performing the transmission and reception of the radio waves is referred to as the "scan."

The receiver 23 detects the reception signals S2 received by the antenna 22 and amplifies them. The reception signals S2 include the echo signal and a noise signal. The echo signal is, among signals received by the antenna 22, a reflection wave on a water particle, a sea surface, etc., caused by the transmission signal S1. The receiver 23 outputs the reception signal S2 to the A/D converter 24.

The A/D converter 24 samples the reception signal S2 in analog format and converts it into digital data (echo data D1) comprised of a plurality of bits. In this embodiment, the echo data D1 includes a value of data for identifying an intensity (signal level) of the echo signal received by the antenna 22. The A/D converter 24 outputs the echo data D1 to the navigation assisting device 3.

The navigation assisting device 3 is configured to calculate, as an influence level vector E, a grade of influence (influence level) of hydrographic phenomena (ocean waves 53, surface tide 54, and wind 55) on the navigation of the ship 50. Further, the navigation assisting device 3 is configured to calculate the influence level of the hydrographic phenomena on the navigation of the ship 50, as an influence level map M1 described later. Further, the navigation assisting device 3 is configured to set the target route R1 considered as optimal to reach the destination, based on the influence level map M1. The navigation assisting device 3 is formed by using a CPU, a ROM, a RAM, etc.

The navigation assisting device 3 includes a hydrographic data acquiring module 31, an influence level vector calculating module 32, an efficiency calculating module 33, an influence level map calculating module 34, and a route setting module 35.

The hydrographic data acquiring module 31 acquires hydrographic data D10 (D11, D12 and D13) for identifying the hydrographic phenomena (ocean waves 53, surface tide 54, and wind 55) in the vicinity of the ship 50, based on the echo data D1 from the A/D converter 24.

The hydrographic data acquiring module 31 includes an ocean wave data acquiring submodule 311, a surface tide data acquiring submodule 312, and a wind data acquiring submodule 313.

The ocean wave data acquiring submodule 311 is configured to generate the ocean wave data D11 for identifying the velocity vector $V_{wave}$ of the ocean wave 53 in the vicinity of the ship 50. The ocean wave data acquiring submodule 311 reads the echo data D1 obtained in a plurality of sweeps corresponding to a single scan, for example. Thus, the ocean wave data acquiring submodule 311 detects intensities of the reception signals S2 from respective positions in an r-$\theta$ coordinate system centering on the ship 50. The ocean wave data acquiring submodule 311 generates luminance value data indicating the signal intensity at each coordinate in the r-$\theta$ coordinate system.

Note that, the r-$\theta$ coordinate system takes the ship 50 as its center, r as a distance from the ship 50, and $\theta$ as an angle in the azimuth direction C1. The ocean wave data acquiring submodule 311 generates the luminance value data at each of a plurality of scan timings. The ocean wave data acquiring submodule 311 detects a motion of the ocean wave 53 (height, occurring cycle, direction, etc., of the wave 53) by ocean wave analysis using 3-dimensional FFT.

The ocean wave data acquiring submodule 311 generates the ocean wave data D11 for identifying the velocity vector $V_{wave}$ of the ocean wave 53 at each position in the r-$\theta$ coordinate system. The ocean wave data acquiring submodule 311 outputs the ocean wave data D11 to the influence level vector calculating module 32.

The surface tide data acquiring submodule 312 is configured to generate the surface tide data D12 for identifying the velocity vector $V_{tide}$ of the surface tide 54 in the vicinity of the ship 50. The surface tide data acquiring submodule 312 generates luminance value data in a similar manner to the above case. Next, the surface tide data acquiring submodule 312 detects the surface tide 54, for example, by image analysis (optical flow) using the luminance value data at each of the plurality of scan timings.

The surface tide data acquiring submodule 312 generates the surface tide data D12 for identifying the velocity vector $V_{tide}$ of the surface tide 54 at each position in the r-$\theta$ coordinate system. The surface tide data acquiring submodule 312 outputs the surface tide data D12 to the influence level vector calculating module 32.

The wind data acquiring submodule 313 is configured to generate the wind data D13 for identifying the velocity vector $V_{wind}$ of the wind 55 in the vicinity of the ship 50. The wind data acquiring submodule 313 detects the wind 55, for example, by image analysis (optical flow) in a similar manner to the above case.

The wind data acquiring submodule 313 generates the wind data D13 for identifying the velocity vector $V_{wind}$ of the wind 55 at each position in the r-$\theta$ coordinate system. The wind data acquiring submodule 313 outputs the wind data D13 to the influence level vector calculating module 32.

Note that, in this embodiment, as described above, the reception signal S2 given to the hydrographic data acquiring module 31 is acquired in a manner that the antenna device 2 provided to the ship 50 performs a detection over the vicinity of the ship 50. However, it is not limited to this. For example, the hydrographic data acquiring module 31 may use the hydrographic data measured at other places than the ship 50.

For example, the hydrographic data acquiring module 31 may acquire data required for acquiring the hydrographic data D10 (ocean wave data D11, surface tide data D12, and wind data D13) by communication with a meteorological satellite, a host computer of a ship company of the ship, etc. Further, the hydrographic data acquiring module 31 may acquire data required for acquiring the hydrographic data D10 by utilizing sensors provided to the ship 50 (the antenna device 2, an anemoscope, etc.) and the communication described above.

The influence level vector calculating module 32 is one example of an "influence level calculating module" in this disclosure. The influence level vector calculating module 32 is configured to calculate the influence level of the hydrographic phenomena (ocean waves 53, surface tide 54, and wind 55) on the navigation of the ship 50, based on (by taking a center position at) the ship 50.

Specifically, the influence level vector calculating module 32 calculates the influence level of the hydrographic phenomena (ocean waves 53, surface tide 54, and wind 55) on the navigation of the ship 50, by using the hydrographic data D10 acquired by the hydrographic data acquiring module 31. In this embodiment, the influence level vector calculating module 32 calculates coordinates of positions in the vicinity of the ship 50 based on satellite data D2 received by the GNSS (Global Navigation Satellite System) receiver 4 from artificial satellites. Next, the influence level vector calculating module 32 calculates the velocity vectors $V_{wave}$, $V_{tide}$, and $V_{wind}$ of the respective hydrographic phenomena at each position in the vicinity of the ship 50, by using the hydrographic data D10.

An influence level vector E indicates the influence of the hydrographic phenomena 53, 54 and 55 on the motion of the ship 50. More specifically, the influence level vector E is a vector related to a thrust force on the ship 50 caused by the hydrographic phenomena. In this embodiment, the influence level vector E corresponds to a thrust force on a hull of the ship 50 caused by the hydrographic phenomena (ocean waves 53, surface tide 54, and wind 55).

The influence level vector calculating module 32 detects the velocity vectors $V_{wave}$, $V_{tide}$, and $V_{wind}$ of the respective hydrographic phenomena 53, 54 and 55 at a single position in the vicinity of the ship 50. Next, the influence level vector calculating module 32 calculates the influence level vector E at the position concerned.

Specifically, the influence level vector calculating module 32 multiplies the velocity vectors $V_{wave}$, $V_{tide}$, and $V_{wind}$ by predetermined weight coefficients $\alpha_1$, $\alpha_2$ and $\alpha_3$, respectively, and then synthesizes these vectors $V_{wave}$, $V_{tide}$, and $V_{wind}$ to calculate the influence level vector E. The influence level vector E (E(x,y)) is expressed based on the following equation:

$$E(x,y)= f\{\alpha_1 \times V_{wave}(x,y),\ \alpha_2 \times V_{tide}(x,y),\ \alpha_3 \times V_{wind}(x,y)\}.$$

Note that, (x,y) indicates coordinates of a calculation target area for the influence level vector E. The variable x, for example, indicates a position in the East-and-West directions, and the variable y indicates a position in the North-and-South directions. As described above, the influence level vector calculating module 32 calculates the influence level vector E based on the synthetic vector of the velocity vectors $V_{wave}$, $V_{tide}$, and $V_{wind}$ identified by the hydrographic data D10.

The influence level vector calculating module 32 calculates the influence level vector for every arbitrary (predetermined) area in the vicinity of the ship 50. The influence level vector calculating module 32 outputs influence level vector data D3 for identifying the influence level vector E, to the efficiency calculating module 33 and the influence level map calculating module 34.

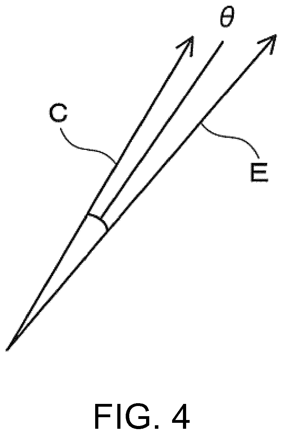

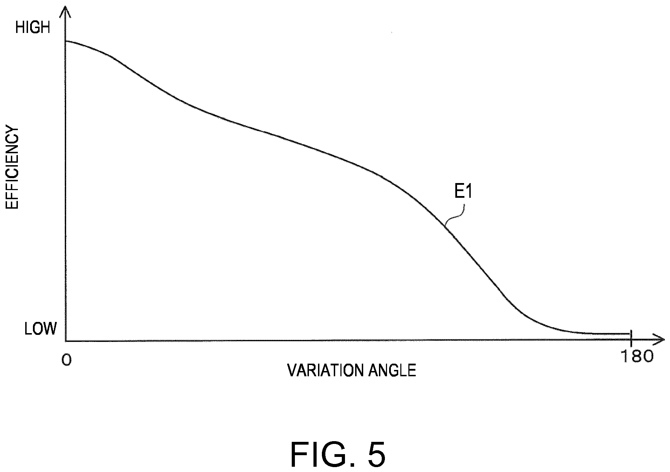

Fig. 4 is a schematic view illustrating processing at the efficiency calculating module 33. Fig. 5 is a schematic view illustrating an efficiency chart stored in the efficiency calculating module 33. With reference to Figs. 2, 4 and 5, the efficiency calculating module 33 is provided to calculate efficiency Ef regarding the current navigation (traveling status) of the ship 50. The efficiency Ef in this case indicates efficiency in view of lowering a fuel consumption.

In this embodiment, the efficiency calculating module 33 calculates the efficiency Ef by using a variation angle θ formed between the influence level vector E at the position of the ship 50 and a course vector C of the ship 50, and the efficiency chart. Specifically, the efficiency calculating module 33 calculates the position of the ship 50 based on the satellite data D2 received by the GNSS receiver 4 from the artificial satellites. Further, the efficiency calculating module 33 calculates the variation angle θ, for example, based on the following equation:

$$\theta = \cos^{-1}(E \cdot C / |E||C|).$$

Note that, the variation angle θ is 0°≤θ≤180°. The efficiency calculating module 33 calculates the efficiency Ef by using the variation angle θ and the efficiency chart. The efficiency chart has the horizontal axis as the variation angle, and the vertical axis as the efficiency.

An efficiency line E1 in the efficiency chart is set such that the efficiency becomes lower as the variation angle θ becomes larger. The efficiency line E1 is set in advance by experiments, etc. The efficiency calculating module 33 calculates the efficiency Ef based on the position of the variation angle θ in the efficiency line E1. The efficiency calculating module 33 outputs efficiency data D4 for identifying the efficiency Ef, to the efficiency display device 6.

The efficiency display device 6 is, for example, a liquid crystal display device. Note that, in this embodiment, the efficiency display device 6, the influence level display device 7, and the route display device 8 are described as separate display devices; however, it is not limited to this. For example, display contents of the efficiency display device 6, display contents of the influence level display device 7 and display contents of the route display device 8 may all be displayed on the same display device.

The efficiency display device 6, upon receiving the efficiency data D4, displays the efficiency Ef identified by the efficiency data D4. The displaying method of the efficiency Ef may be a color display according to the level of the efficiency Ef, or displaying as a value.

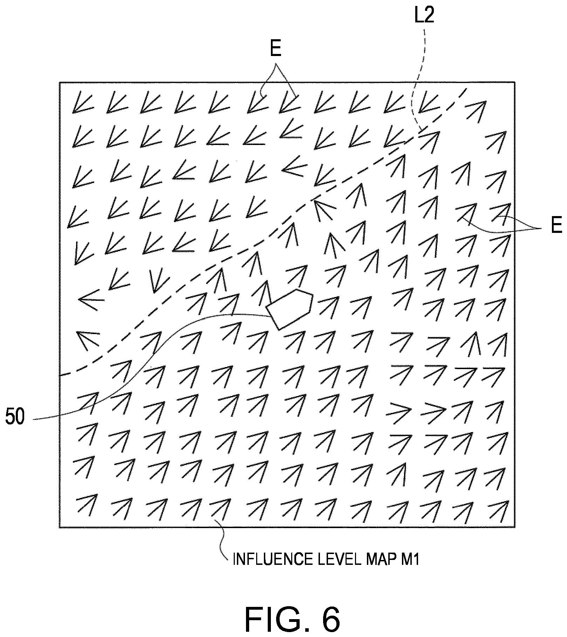

The influence level map calculating module 34 is provided to calculate the influence level map M1. The influence level map M1 is a map indicating a distribution of the influence level vectors E in a plurality of areas in the vicinity of the ship 50. Fig. 6 is a schematic view illustrating the influence level map.

In Fig. 6, for the sake of convenience, the ship 50 is illustrated in the influence level map M1. As illustrated in Figs. 2 and 6, the influence level map M1 is for the inside of a rectangular frame. The influence map M1 is not generated for an area other than the area corresponding to the influence level map M1 within the marine area in the vicinity of the ship 50. Note that, although the influence map M1 is a map for the inside of the rectangular frame, it is not limited to this. For example, the influence level map M1 may be a circular map centering on the position of the ship 50.

In the influence level map M1, the influence level vector E is indicated for the plurality of areas in the vicinity of the ship 50. Note that, the dashed line in Fig. 6 is a boundary line L2 coupling positions where a change ratio of the influence level vector E is above a predetermined value. The influence level map calculating module 34 sets the boundary line L2 at positions where the change ratio of the direction of the influence level vector E is above a predetermined value.

The influence level map calculating module 34 generates, as image data, influence level map data D5 for identifying the influence level map M1. The influence level map calculating module 34 outputs the influence level map data D5 to the influence level display device 7 and the route setting module 35.

The influence level display device 7 is, for example, a liquid crystal display device. The influence level display device 7 displays the influence level map M1 illustrated in Fig. 6 on a display screen of the influence level display device 7. Thus, an operator of the navigation assisting system 1 can know the influence of the hydrographic phenomena (ocean waves 53, surface tide 54, and wind 55) in the vicinity of the ship 50 on the navigation of the ship 50.

With reference to Figs. 1, 2 and 6, the route setting module 35 is provided to set the target route R1 from the current position of the ship 50 to the destination 52. In this embodiment, the route setting module 35 is configured to set the target route R1 by taking into consideration the hydrographic phenomena (influence level map M1).

The route setting module 35 includes a destination setting submodule 351, an azimuth range setting submodule 352, and a target route calculating submodule 353.

The destination setting submodule 351 is connected with the user-interface 5. The user-interface 5 is operated by the operator of the navigation assisting system 1. The operator controls the user-interface 5 to set the destination 52. The user-interface 5 outputs coordinate data D6 for identifying the destination 52, to the destination setting submodule 351. The destination setting submodule 351 sets the destination 52 based on the coordinate data D6 given by the user-interface 5. The destination setting submodule 351 outputs the coordinate data D6 of the destination 52, to the azimuth range setting submodule 352.

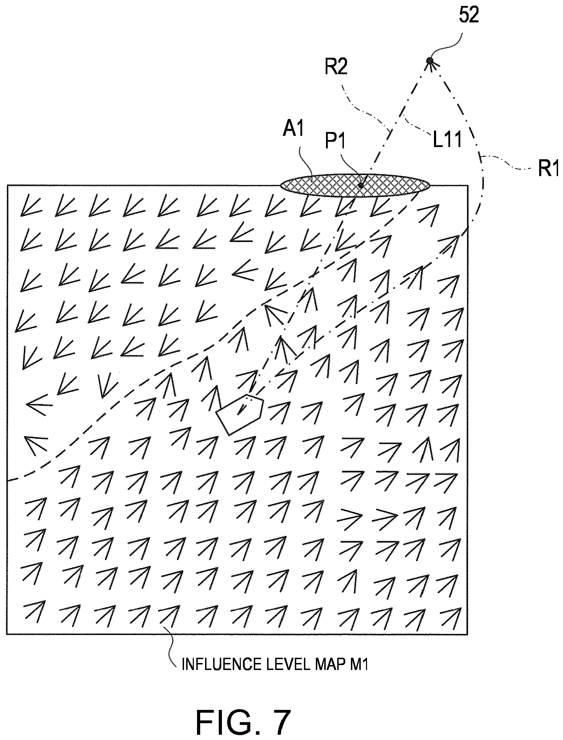

Fig. 7 is a schematic view illustrating processing at the azimuth range setting submodule 352. With reference to Figs. 2 and 7, the azimuth range setting submodule 352 sets an azimuth range A1 regarding the destination 52 within the influence level map M1, by using the satellite data D2, the coordinate data D6 of the destination 52, the influence level map M1, etc. Specifically, the azimuth range setting submodule 352 calculates the coordinates of the ship 50 based on the satellite data D2 received by the GNSS receiver 4 from the artificial satellites.

The azimuth range setting submodule 352 sets an intersection point PI between a straight line L11 coupling the coordinates of the ship 50 to the coordinates of the destination 52 and an edge point of the influence level map M1. Next, the azimuth range setting submodule 352 sets into the azimuth range A1 a predetermined range of the edge point of the influence level map M1 centering on the intersection point P1. The length of the azimuth range A1 is suitably set. The azimuth range setting submodule 352 outputs the azimuth range A1 and data D7 for identifying the influence level map M1, to the target route calculating submodule 353.

The target route calculating submodule 353 is configured to set the target route R1 by using the influence level map M1 and the azimuth range A1. For example, the target route calculating submodule 353 sets the target route R1 within the influence level map M1 so as to reach the azimuth range A1 from the current position of the ship 50 by passing positions with smallest variation angle θ. The target route R1 used here does not necessarily match with a shortest route R2 (straight line L11) to the azimuth range A1. For outside the influence level map M1, the target route calculating submodule 353 sets the target route R1, for example, according to nautical chart data stored in advance. The target route calculating submodule 353 outputs route data D8 for identifying the set target route R1, to the route display device 8.

The route display device 8 is, for example, a liquid crystal display device. For example, the route display device 8 displays the target route R1 and a nautical chart in the vicinity of the ship 50, based on the route data D8 and the nautical chart data.

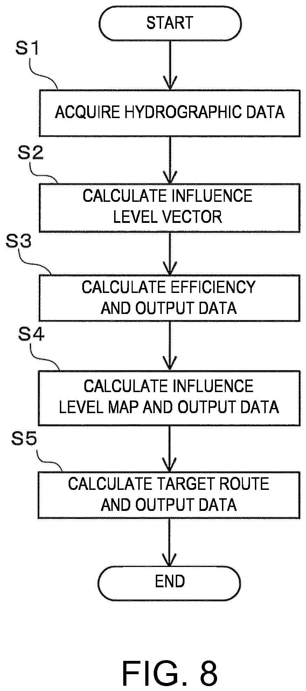

Fig. 8 is a flowchart illustrating one example of a flow of processing at the navigation assisting device 3. Note that hereinafter, the drawings other than Fig. 8 are also suitably referred to, when describing the flow of the processing at the navigation assisting device 3.

The navigation assisting device 3 executes respective steps in the flowchart described below, by reading them from a memory not illustrated. The program can be installed externally. The program to be installed is distributed stored in a memory medium, for example.

In the navigation assisting device 3, first, the hydrographic data acquiring module 31 acquires the hydrographic data D10 (S1). Next, the influence level vector calculating module 32 calculates the influence level vector E by using the hydrographic data D10, the satellite data D2 from the GNSS receiver 4, etc. (S2). Then, the efficiency calculating module 33 calculates the efficiency Ef based on the influence level vector E at the current position of the ship 50 and the course vector C, and outputs the efficiency data D4 for identifying the efficiency Ef, to the efficiency display device 6 (S3).

Further, the influence level map calculating module 34 calculates the influence level map M1 and outputs the influence level map data D5 to the influence level display device 7 and the route setting module 35 (S4). The route setting module 35 calculates the target route R1 based on the influence level map data D5, the satellite data D2 from the GNSS receiver 4, the coordinate data D6 from the user-interface 5, the nautical chart data, etc., and the route setting module 35 outputs the route data D8 to the route display device 8 (S5).

[Program] The program for the navigation assisting device 3 of this embodiment is a program configured to cause a computer to execute the processing of the navigation assisting device 3. By installing the program into the computer and executing it, the navigation assisting device 3 and a method of assisting the navigation of this embodiment can be achieved. In this case, a CPU (Central Processing Unit) of the computer functions as the hydrographic data acquiring module 31, the influence level vector calculating module 32, the efficiency calculating module 33, the influence level map calculating module 34, and the route setting module 35, and the computer performs the processing. Note that, the navigation assisting device 3 may be achieved by the cooperation between the software and hardware as this embodiment, or may be achieved by hardware.

As described above, according to the navigation assisting device 3 of this embodiment, the influence level vector calculating module 32 calculates the influence level vector E caused by the plurality of hydrographic phenomena (ocean waves 53, surface tide 54, and wind 55) on the navigation of the ship 50, based on the ship 50. Through calculating the influence level vector E based on the position of the ship 50 by the influence level vector calculating module 32, the influence of the hydrographic phenomena (ocean waves 53, surface tide 54, and wind 55) on the navigation of the ship 50 can be detected more accurately.

For setting the target route R1 with a low energy consumption during the travel of the ship 50, the influence level caused on the hull of the ship 50 by the hydrographic phenomena in the vicinity of the ship 50 needs to be known quantitatively. Conventionally, the calculation of the influence level (force of pushing the ship 50) is performed based on the data distributed by a meteorological observatory, etc. Therefore, at the actual current position of the ship 50, it is difficult to calculate an accurate influence level, due to an estimation error of the data, a resolution, etc. In this regard, according to the navigation assisting device 3, the influence level vector E is calculated based on the ship 50, the influence level vector E at the current position of the ship 50 can be calculated more accurately. Therefore, the operator of the navigation assisting device 3 can obtain a more accurate determination material for steering the ship, following the purpose of the navigation.

Further, according to the navigation assisting device 3, the hydrographic data acquiring module 31 acquires the ocean wave data D11, the surface tide data D12, and the wind data D13. Moreover, the influence level vector calculating module 32 calculates the influence level vector E based on the synthetic vector of the respective velocity vectors $V_{wave}$, $V_{tide}$ and $V_{wind}$. By this configuration, the navigation assisting device 3 can calculate the influence level vector E by taking into consideration the ocean wave 53, the surface tide 54, and the wind 55 that cause great influence on the navigation of the ship 50.

Further, according to the navigation assisting device 3, the efficiency calculating module 33 calculates the efficiency Ef based on the relationship between the course vector C of the ship 50 and the influence level vector E. By such a configuration, the navigation assisting device 3 can calculate whether the course of the ship 50 is suitable in view of saving energy. Moreover, to achieve the navigation of the ship 50 with low fuel consumption, it is most effective to match the influence level vector E with the course vector C of the ship 50. Conventionally, in steering the ship, the operator cannot visually confirm the influence of the hydrographic phenomena on the ship 50 (influence level vector E). In this regard, the navigation assisting device 3 can display the efficiency Ef to the efficiency display device 6. Thus, the operator can visually confirm the influence of the hydrographic phenomena on the ship 50. Thereby, the operator can navigate the ship 50 more efficiently.

Further, according to the navigation assisting device 3, the influence level map calculating module 34 is also provided. By this configuration, the map M1 of the influence level vector E caused by the hydrographic phenomena in the vicinity based on the ship 50 can be acquired.

Further, according to the navigation assisting device 3, the route setting module 35 sets the target route R1

based on the influence level map M1. By this configuration, the target route R1 on which the ship 50 can receive better effects from the hydrographic phenomena can be set by the route setting module 35.

Note that, in the conventional target route setting, etc., that are based on the hydrographic phenomena, target setting is mainly performed based on information from artificial satellites and hydrographic observation information on a marine area obtained through macro-observation by a meteorological observatory, etc. However, in the setting of the target route based on the hydrographic information obtained through the macro-observation, a target route with low efficiency may be set due to an error in the hydrographic observation, a resolution, etc. A target route with low efficiency may also be set due to a hydrographic forecast error. However, in this embodiment, the navigation assisting device 3 can set the target route R1 based on the reception signal S2 obtained by the sensor (antenna device 2) mounted on the ship 50. Thus, the navigation assisting device 3 can set the optimal target route R1 for a local (micro) area in the vicinity of the ship 50.

Although the embodiment of this disclosure is described above, this disclosure is not limited to the embodiment described above. This disclosure may be variously modified within the described range of the claims. For example, this disclosure may be implemented by modifying as follows.

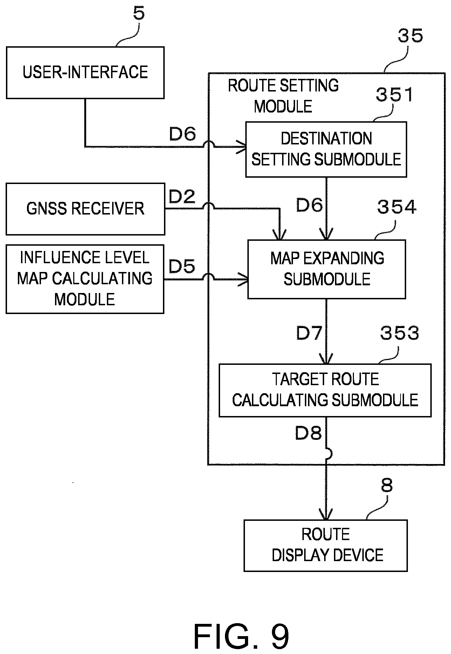

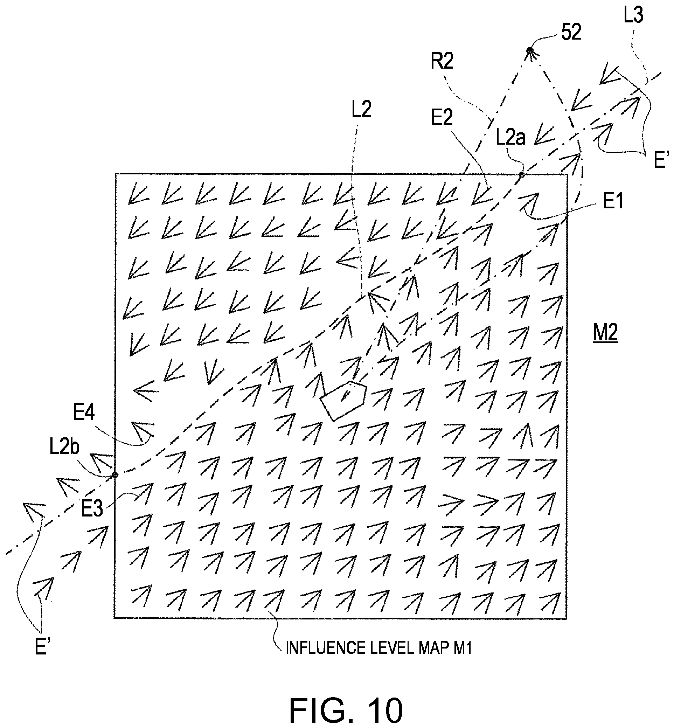

(1) For example, instead of the azimuth range setting submodule 352 of the route setting module 35 described above, a map expanding submodule 354 illustrated in Fig. 9 may be provided. Fig. 9 is a block diagram of a substantial part of a navigation assisting system according to a modification of this disclosure. In the modification illustrated in Fig. 9, a configuration other than the map expanding submodule 354 is similar to the configuration of the embodiment described above, and therefore, the same reference numerals are denoted thereto in the drawings and description thereof is omitted. Fig. 10 is a schematic view illustrating processing at the map expanding submodule 354.

With reference to Figs. 9 and 10, the map expanding submodule 354 reads the influence level map data D5 and the coordinate data D6 of the destination 52. As illustrated in Fig. 10, when the destination 52 exists outside an area where the influence level map M1 is formed (within a non-mapped range M2), the influence level map M1 is expanded. Specifically, the map expanding submodule 354 expands the influence level map M1, assuming that the tendency of the hydrographic phenomena identified in the influence level map M1 remains within the non-mapped range M2. In this case, the boundary line L2 is extended to keep the tendency of the shape of the boundary line L2 in the influence level map M1. As a method of extending the boundary line L2, for example, a method of adding, in the non-mapped range M2, a straight line L3 (boundary line) coupling end points L2a and L2b of the boundary line L2 taken at edges of the influence level map M1 is considered. Note that, also as a method of extending the boundary line L2, boundary line information modeled based on spectrum analysis similar to linear predictive analysis may be used.

Furthermore, the influence level vectors E (E1 to E4) closest to the end points L2a and L2b in the influence level map M1 are copied to the non-mapped area M2 to follow the determined boundary lines L2 and L3, so as to determine respective influence level vectors E' in the non-mapped range M2. Note that, also for the respective influence level vectors E' in the non-mapped area M2, they may be set using linear predictive analysis, etc.

The influence level map data of the extended influence level map M1 is outputted to the target route calculating submodule 353. The target route calculating submodule 353 sets the target route R1 by using the influence level map data. The target route R1 in this case, for example, does not necessarily match with the shortest target route R2 between the current position of the ship 50 and the destination 52.

(2) Further, in the embodiment described above, the mode of detecting the ocean wave, the surface tide, and the wind as the hydrographic information in the vicinity of the ship is described as an example. However, it is not limited to this. Other kinds of hydrographic phenomena may be detected as the hydrographic information in the vicinity of the ship.

(3) Further, although this disclosure has the configuration of detecting the hydrographic phenomena, it may also be used on fresh water.

## INDUSTRIAL APPLICABILITY

This disclosure is broadly applicable as navigation assisting devices, a method of assisting navigation, and a program.

## DESCRIPTION OF REFERENCE NUMERAL(S)

3 Navigation Assisting Device
33 Efficiency Calculating Module

32 Influence Level Vector Calculating Module (Influence Level Calculating Module)
34 Influence Level Map Calculating Module
35 Route Setting Module (Target Route Setting Module)
50 Ship (Predetermined Ship)
31 Hydrographic Data Acquiring Submodule
D10 Hydrographic Data
Ef Efficiency
R1 Target Route

**Claims**

1. A navigation assisting device (3), comprising:

   a hydrographic data acquiring module (31) configured to acquire hydrographic data (D10, D12, D13) for identifying a plurality of hydrographic phenomena (53, 54, 55) in the vicinity of a predetermined ship (50); and
   an influence level calculating module (32) configured to calculate an influence level of the plurality of hydrographic phenomena (53, 54, 55) on navigation of the predetermined ship (50), based on the predetermined ship (50),
   wherein the hydrographic data acquiring module (31) is configured to acquire, as the hydrographic data (D10, D12, D13), data for identifying a surface tide (54) of the sea and wind (55),
   wherein the influence level calculating module (32) is **characterized in that**
   it calculates the influence level based on a synthetic vector of respective velocity vectors of the plurality of hydrographic phenomena (53, 54, 55) specified based on the hydrographic data (D10, D12, D13), wherein the synthetic vector E(x,y) is calculated using the equation E(x,y)= f{$\alpha_2 \times V_{tide}$(x,y), $\alpha_3 \times V_{wind}$(x,y)}, wherein $V_{tide}$(x, y) denotes a tide velocity vector, $V_{wind}$(x,y) denotes a wind velocity vector and $\alpha_2$ and $\alpha_3$ denote predetermined weight coefficients, and
   wherein the device further comprises an efficiency calculating module (33) configured to calculate efficiency regarding the navigation of the predetermined ship,
   wherein the efficiency calculating module (33) calculates the efficiency based on a relationship between a course of the predetermined ship (50) and a direction of the synthetic vector.

2. The navigation assisting device (3) of claim 1, further comprising an influence level map calculating module (34) configured to calculate a map (M1) indicating the influence level within each of a plurality of azimuth ranges in the vicinity of the predetermined ship (50).

3. The navigation assisting device (3) of claim 2, further comprising a target route setting module (35) configured to set a target route (R1) to a destination (52) of the predetermined ship (50),
   wherein the target route setting module (35) sets the target route (R1) based on the influence level map (M1).

4. A method of assisting navigation, comprising:

   a hydrographic data acquiring step of acquiring hydrographic data (D10, D12, D13) for identifying a plurality of hydrographic phenomena (53, 54, 55) in the vicinity of a predetermined ship (50), wherein, as the hydrographic data (D10, D12, D13), data for identifying a surface tide (54) of the sea and wind (55) are acquired; and
   an influence level calculating step of calculating an influence level of the plurality of hydrographic phenomena (53, 54, 55) on navigation of the predetermined ship (50), based on the predetermined ship,
   **characterized in that** the influence level is calculated based on a synthetic vector of respective velocity vectors of the plurality of hydrographic phenomena specified based on the hydrographic data (D10, D12, D13), wherein the synthetic vector E(x,y) is calculated using the equation E(x,y)= f{$\alpha 2 \times V tide$(x,y), $\alpha 3 \times V wind$(x,y)}, wherein $V_{tide}$(x,y) denotes a tide velocity vector, $V_{wind}$(x,y) denotes a wind velocity vector and $\alpha_2$ and $\alpha_3$ denote predetermined weight coefficients, and
   wherein an efficiency regarding the navigation of the predetermined ship is calculated based on a relationship between a course of the predetermined ship (50) and a direction of the synthetic vector.

5. A computer program comprising instructions, which when executed on a computer, cause said computer to carry out:

   a hydrographic data acquiring step of acquiring hydrographic data (D10, D12, D13) for identifying a plurality of hydrographic phenomena (53, 54, 55) in the vicinity of a predetermined ship (50), wherein, as the hydrographic data (D10, D12, D13), data for identifying a surface tide (54) of the sea and wind (55) are acquired; and an influence level calculating step of calculating an influence level of the plurality of hydrographic phenomena (53, 54, 55) on navigation of the predetermined ship (50), based on the predetermined ship (50), **characterized in that** the influence level is calculated based on a synthetic vector of respective velocity vectors of the plurality of hydrographic phenomena (53, 54, 55) specified based on the hydrographic data (D10, D12, D13), wherein the synthetic vector E(x,y) is calculated using the equation $E(x,y)= f\{\alpha_2 \times V_{tide}(x,y), \alpha_3 \times V_{wind}(x,y)\}$, wherein $V_{tide}(x,y)$ denotes a tide velocity vector, $V_{wind}(x,y)$ denotes a wind velocity vector and $\alpha_2$ and $\alpha_3$ denote predetermined weight coefficients and wherein an efficiency regarding the navigation of the predetermined ship is calculated based on a relationship between a course of the predetermined ship (50) and a direction of the synthetic vector.

**Patentansprüche**

1. Navigationsassistenzvorrichtung (3), umfassend:

   ein hydrographische Daten erfassendes Modul (31), das dafür konfiguriert ist, hydrographische Daten (D10, D12, D13) zu erfassen, um eine Vielzahl hydrographischer Phänomene (53, 54, 55) in der Umgebung eines vorbestimmten Schiffs (50) zu identifizieren; und
   ein ein Einflussniveau berechnendes Modul (32), das dafür konfiguriert ist, ein Einflussniveau der Vielzahl hydrographischer Phänomene (53, 54, 55) auf eine Navigation des vorbestimmten Schiffs (50) basierend auf dem vorbestimmten Schiff (50) zu berechnen,
   wobei das hydrographische Daten erfassende Modul (31) dafür konfiguriert ist, als die hydrographischen Daten (D10, D12, D13) Daten zum Identifizieren einer Oberflächentide (54) des Meeres und des Winds (55) zu erfassen,
   wobei das ein Einflussniveau berechnende Modul (32) **dadurch gekennzeichnet ist, dass**
   es das Einflussniveau basierend auf einem synthetischen Vektor jeweiliger Geschwindigkeitsvektoren der Vielzahl hydrographischer Phänomene (53, 54, 55) berechnet, die basierend auf den hydrographischen Daten (D10, D12, D13) spezifiziert werden, wobei der synthetische Vektor E(x,y) unter Verwendung der Gleichung $E(x,y) = f\{a_2 \times V_{tide}(x,y), \alpha_3 \times V_{wind}(x,y)\}$ berechnet wird, wobei $V_{tide}(x,y)$ einen Tiden-Geschwindigkeitsvektor bezeichnet, $V_{wind}(x,y)$ einen Wind-Geschwindigkeitsvektor bezeichnet und $\alpha_2$ und $\alpha_3$ vorbestimmte Gewichtungskoeffizienten bezeichnen und
   wobei die Vorrichtung ferner ein eine Effizienz berechnendes Modul (33) aufweist, das dafür konfiguriert ist, eine Effizienz bezüglich der Navigation des vorbestimmten Schiffs zu berechnen,
   wobei das eine Effizienz berechnende Modul (33) die Effizienz basierend auf einer Beziehung zwischen einem Kurs des vorbestimmten Schiffs (50) und einer Richtung des synthetischen Vektors berechnet.

2. Navigationsassistenzvorrichtung (3) nach Anspruch 1, ferner umfassend ein eine Einflussniveau-Karte berechnendes Modul (34), das dafür konfiguriert ist, eine Karte (M1) zu berechnen, die das Einflussniveau innerhalb jedes einer Vielzahl von Azimutbereichen in der Umgebung des vorbestimmten Schiffs (50) angibt.

3. Navigationsassistenzvorrichtung (3) nach Anspruch 2, ferner umfassend ein eine Zielroute einstellendes Modul (35), das dafür konfiguriert ist, eine Zielroute (R1) zu einem Bestimmungsort (52) des vorbestimmten Schiffs (50) einzustellen,
   wobei das eine Zielroute einstellende Modul (35) die Zielroute (R1) basierend auf der Einflussniveau-Karte (M1) einstellt.

4. Navigationsassistenzverfahren, umfassend:

   einen hydrographische Daten erfassenden Schritt, um hydrographische Daten (D10, D12, D13) zu erfassen, um eine Vielzahl hydrographischer Phänomene (53, 54, 55) in der Umgebung eines vorbestimmten Schiffs (50) zu identifizieren, wobei als die hydrographischen Daten (D10, D12, D13) Daten zum Identifizieren einer Oberflächentide (54) des Meeres und des Winds (55) erfasst werden; und
   einen ein Einflussniveau berechnenden Schritt, um ein Einflussniveau der Vielzahl hydrographischer Phänomene (53, 54, 55) auf eine Navigation des vorbestimmten Schiffs (50) basierend auf dem vorbestimmten Schiff (50) zu berechnen,
   **dadurch gekennzeichnet, dass** das Einflussniveau basierend auf einem synthetischen Vektor jeweiliger Geschwindigkeitsvektoren der Vielzahl hydrographischer Phänomene berechnet wird, die basierend auf den hydrographischen Daten (D10, D12, D13) spezifiziert werden, wobei der synthetische Vektor E(x,y) unter Verwendung der Gleichung E(x,y) = f{$\alpha_2 \times V_{tide}$(x,y), $\alpha_3 \times V_{wind}$(x,y)} berechnet wird, wobei $V_{tide}$(x,y) einen Tiden-Geschwindigkeitsvektor bezeichnet, $V_{wind}$(x,y) einen Wind-Geschwindigkeitsvektor bezeichnet und $\alpha_2$ und $\alpha_3$ vorbestimmte Gewichtungskoeffizienten bezeichnen und

wobei eine Effizienz bezüglich der Navigation des vorbestimmten Schiffs basierend auf einer Beziehung zwischen einem Kurs des vorbestimmten Schiffs (50) und einer Richtung des synthetischen Vektors berechnet wird.

**5.** Computerprogramm, das Anweisungen umfasst, welche, wenn sie auf einem Computer ausgeführt werden, den Computer veranlassen, auszuführen:

einen hydrographische Daten erfassenden Schritt, um hydrographische Daten (D10, D12, D13) zu erfassen, um eine Vielzahl hydrographischer Phänomene (53, 54, 55) in der Umgebung eines vorbestimmten Schiffs (50) zu identifizieren, wobei als die hydrographischen Daten (D10, D12, D13) Daten zum Identifizieren einer Oberflächentide (54) des Meeres und des Winds (55) erfasst werden; und

einen ein Einflussniveau berechnenden Schritt, um ein Einflussniveau der Vielzahl hydrographischer Phänomene (53, 54, 55) auf eine Navigation des vorbestimmten Schiffs (50) basierend auf dem vorbestimmten Schiff (50) zu berechnen,

**dadurch gekennzeichnet, dass** das Einflussniveau basierend auf einem synthetischen Vektor jeweiliger Geschwindigkeitsvektoren der Vielzahl hydrographischer Phänomene (53, 54, 55) berechnet wird, die basierend auf den hydrographischen Daten (D10, D12, D13) spezifiziert werden, wobei der synthetische Vektor E(x,y) unter Verwendung der Gleichung E(x,y) = f{$\alpha_2 \times V_{tide}$(x,y), $\alpha_3 \times V_{wind}$(x,y)} berechnet wird, wobei $V_{tide}$(x,y) einen Tiden-Geschwindigkeitsvektor bezeichnet, $V_{wind}$(x,y) einen Wind-Geschwindigkeitsvektor bezeichnet und $\alpha_2$ und $\alpha_3$ vorbestimmte Gewichtungskoeffizienten bezeichnen, und

wobei eine Effizienz bezüglich der Navigation des vorbestimmten Schiffs basierend auf einer Beziehung zwischen einem Kurs des vorbestimmten Schiffs (50) und einer Richtung des synthetischen Vektors berechnet wird.

**Revendications**

**1.** Dispositif d'aide à la navigation (3), comprenant :

un module d'acquisition de données hydrographiques (31) configuré pour acquérir des données hydrographiques (D10, D12, D13) pour identifier une pluralité de phénomènes hydrographiques (53, 54, 55) au voisinage d'un navire prédéterminé (50) ; et

un module de calcul de niveau d'influence (32) configuré pour calculer un niveau d'influence de la pluralité de phénomènes hydrographiques (53, 54, 55) sur une navigation du navire prédéterminé (50), sur la base du navire prédéterminé (50),

dans lequel le module d'acquisition de données hydrographiques (31) est configuré pour acquérir, en tant que données hydrographiques (D10, D12, D13), des données pour identifier une marée en surface (54) de la mer et un vent (55),

dans lequel le module de calcul de niveau d'influence (32) est **caractérisé en ce que**

il calcule le niveau d'influence sur la base d'un vecteur de synthèse de vecteurs de vitesse respectifs de la pluralité de phénomènes hydrographiques (53, 54, 55) spécifiés sur la base des données hydrographiques (D10, D12, D13), dans lequel le vecteur de synthèse E(x,y) est calculé à l'aide de l'équation E(x,y) = f{$a_2 \times V_{tide}$(x,y), $\alpha_3 V_{wind}$(x,y)}, dans lequel $V_{tide}$(x,y) désigne un vecteur de vitesse de marée, $V_{wind}$(x,y) désigne un vecteur de vitesse de vent, et $\alpha_2$ et $\alpha_3$ désignent des coefficients de pondération prédéterminés, et

dans lequel le dispositif comprend en outre un module de calcul d'efficacité (33) configuré pour calculer l'efficacité concernant la navigation du navire prédéterminé,

dans lequel le module de calcul d'efficacité (33) calcule l'efficacité sur la base d'une relation entre un trajet du navire prédéterminé (50) et une direction du vecteur de synthèse.

**2.** Dispositif d'aide à la navigation (3) selon la revendication 1, comprenant en outre un module de calcul de carte de niveaux d'influence (34) configuré pour calculer une carte (M1) indiquant le niveau d'influence à l'intérieur d'une pluralité de plages d'azimut au voisinage du navire prédéterminé (50).

**3.** Dispositif d'aide à la navigation (3) selon la revendication 2, comprenant en outre un module d'établissement de route cible (35) configuré pour établir une route cible (R1) vers une destination (52) du navire prédéterminé (50), dans lequel le module d'établissement de route cible (35) établit la route cible (R1) sur la base de la carte de niveaux d'influence (M1).

4. Procédé d'aide à la navigation, comprenant :

une étape d'acquisition de données hydrographiques consistant à acquérir des données hydrographiques (D10, D12, D13) pour identifier une pluralité de phénomènes hydrographiques (53, 54, 55) au voisinage d'un navire prédéterminé (50), dans lequel, en tant que données hydrographiques (D10, D12, D13), des données pour identifier une marée en surface (54) de la mer et un vent (55) sont acquises ; et
une étape de calcul de niveau d'influence consistant à calculer un niveau d'influence de la pluralité de phénomènes hydrographiques (53, 54, 55) sur une navigation du navire prédéterminé (50), sur la base du navire prédéterminé,
**caractérisé en ce que** le niveau d'influence est calculé sur la base d'un vecteur de synthèse de vecteurs de vitesse respectifs de la pluralité de phénomènes hydrographiques spécifiés sur la base des données hydrographiques (D10, D12, D13), dans lequel le vecteur de synthèse $E(x,y)$ est calculé à l'aide de l'équation $E(x,y) = f\{\alpha_2 \times V_{tide}(x,y), \alpha_3 \times V_{wind}(x,y)\}$, dans lequel $V_{tide}(x,y)$ désigne un vecteur de vitesse de marée, $V_{wind}(x,y)$ désigne un vecteur de vitesse de vent et $\alpha_2$ et $\alpha_3$ désignent des coefficients de pondération prédéterminés, et
dans lequel une efficacité concernant la navigation du navire prédéterminé est calculée sur la base d'une relation entre un trajet du navire prédéterminé (50) et une direction du vecteur de synthèse.

5. Programme d'ordinateur comprenant des instructions qui, lorsqu'elles sont exécutées sur un ordinateur, font mettre en œuvre audit ordinateur :

une étape d'acquisition de données hydrographiques consistant à acquérir des données hydrographiques (D10, D12, D13) pour identifier une pluralité de phénomènes hydrographiques (53, 54, 55) au voisinage d'un navire prédéterminé (50), dans lequel, en tant que données hydrographiques (D10, D12, D13), des données pour identifier une marée en surface (54) de la mer et un vent (55) sont acquises ; et
une étape de calcul de niveau d'influence consistant à calculer un niveau d'influence de la pluralité de phénomènes hydrographiques (53, 54, 55) sur une navigation du navire prédéterminé (50), sur la base du navire prédéterminé (50),
**caractérisé en ce que** le niveau d'influence est calculé sur la base d'un vecteur de synthèse de vecteurs de vitesse respectifs de la pluralité de phénomènes hydrographiques (53, 54, 55) spécifiés sur la base des données hydrographiques (D10, D12, D13), dans lequel le vecteur de synthèse $E(x,y)$ est calculé à l'aide de l'équation $E(x,y) = f\{\alpha_2 \times V_{tide}(x,y), \alpha_3 \times V_{wind}(x,y)\}$, dans lequel $V_{tide}(x,y)$ désigne un vecteur de vitesse de marée, $V_{wind}(x,y)$ désigne un vecteur de vitesse de vent et $\alpha_2$ et $\alpha_3$ désignent des coefficients de pondération prédéterminés et dans lequel une efficacité concernant la navigation du navire prédéterminé est calculée sur la base d'une relation entre un trajet du navire prédéterminé (50) et une direction du vecteur de synthèse.

FIG. 1

FIG. 2

FIG. 3

EP 3 006 322 B1

FIG. 4

FIG. 5

INFLUENCE LEVEL MAP M1

FIG. 6

INFLUENCE LEVEL MAP M1

FIG. 7

START

S1

ACQUIRE HYDROGRAPHIC DATA

S2

CALCULATE INFLUENCE
LEVEL VECTOR

S3

CALCULATE EFFICIENCY
AND OUTPUT DATA

S4

CALCULATE INFLUENCE
LEVEL MAP AND OUTPUT DATA

S5

CALCULATE TARGET ROUTE
AND OUTPUT DATA

END

FIG. 8

FIG. 9

FIG. 10

**EP 3 006 322 B1**

## REFERENCES CITED IN THE DESCRIPTION

**Patent documents cited in the description**

- WO 2008096376 A1
- US 2008255757 A1
- JP 4934756 B
- JP 2001133548 A